(19) Europäisches Patentamt

European Patent Office

Office européen des brevets

(11) Publication number: **0 343 746 B1**

# EUROPEAN PATENT SPECIFICATION

(45) Date of publication of patent specification: **09.03.94**   (51) Int. Cl.5: **F23C 9/08**, F23C 7/00

(21) Application number: **89201313.7**

(22) Date of filing: **23.05.89**

(54) **A furnace combustion method.**

(30) Priority: **25.05.88 JP 127979/88**

(43) Date of publication of application:
**29.11.89 Bulletin 89/48**

(45) Publication of the grant of the patent:
**09.03.94 Bulletin 94/10**

(84) Designated Contracting States:
**DE FR GB**

(56) References cited:
EP-A- 0 038 257   DE-A- 3 202 105
FR-A- 2 532 405   GB-A- 1 215 925
US-A- 4 357 134   US-A- 4 395 223

**IRON AND STEEL ENGINEER. vol. 63, no. 6, June 1986, PITTSBURGH US pages 43 -46; J.E.Hovis: "Low NOx burners for metallurgical furnaces"**

(73) Proprietor: **TOKYO GAS CO., LTD.**
**5-20, Kaigan 1-chome**
**Minato-ku Tokyo 105(JP)**

(72) Inventor: **Nakamachi, Ichiro**
**39-3, Sakae**
**Abiko-city Chiba Pref.(JP)**
Inventor: **Yasuzawa, Kunio**
**6-21-2, Shimosueyoshi**
**Tsurumi-ku Kanagawa Pref.(JP)**
Inventor: **Miyahara, Tadato**
**6-9-5, Chuo**
**Ota-ku Tokyo(JP)**
Inventor: **Nagata, Takahiro**
**1-48-6, Higashi Ikebukuro**
**Toshima-ku Tokyo(JP)**

(74) Representative: **Van kan, Johan Joseph Hubert, Ir. et al**
**Algemeen Octrooibureau**
**P.O. Box 645**
**Boschdijk 155**
**NL-5612 HB Eindhoven (NL)**

## Description

The invention relates to a method for operating a furnace having an air supply port and a fuel supply port whereby said ports debouch at some distance from each other into the furnace wherein the fuel and air are injected from said fuel supply port for high temperature and the air supply port in such a way that jets of the air and the fuel may suck and be mixed with the furnace gas respectively independently, and are subsequently mixed with each other for combustion in the furnace.

It is an aim of the invention to decrease nitrogen oxides (hereinafter called also NOx) especially during operating of industrial heating furnaces.

A conventional NOx combustion technique is to recirculate furnace gas as described e.g. in EP-A-0038257. According the method desribed therein a fuel and air are injected respectively independently into the furnace, and the respective jets suck and are mixed with the furnace gas, and the air and the fuel respectively diluted by the furnace gas are then mixed for combustion. In this method, if the quantity of the furnace gas sucked and mixed is larger, the NOx is decreased more. However, if the quantity of the furnace gas sucked and mixed is larger, the flame becomes more unstable, not allowing perfect combustion to be maintained. This trend is more remarkable at a lower furnace temperature.

Therefore, in view of the stability of flame, there is a limit in the quantity of the furnace gas sucked and mixed, and so in the decrease of NOx.

In the burner of EP-A-0038257, as a means for securing the stability of flame, an oxidizing agent (oxygen or oxygen rich air or air) injection port is formed around a fuel injection port. The oxidizing agent is injected by 5 to 10% based on the total amount of all the oxidizing agent from the injection port, to form a stable flame at the outlet. However, this means that the fuel is burned before it is mixed with the furnace gas and this method lowers the NOx decreasing effect to be achieved by the recirculation of the furnace gas.

The object of the present invention is to achieve stable combustion in various heating furnaces, while keeping the generated NOx at a low level, compared to the conventional combustion methods, by sufficient recirculation of the furnace gas.

So according the invention when the furnace temperature is lower than the ignition temperature of the fuel, air is injected from said air supply port while the fuel is not injected from the fuel supply port, but is injected only from an auxiliary fuel supply port contained in the air supply port, to promote the mixing of the air and the fuel as coaxial jets for combustion, and when the furnace temperature has reached a temperature higher than the ignition temperature of the fuel, the supply of fuel from said auxiliary fuel supply port is stopped and the supply of fuel from the fuel supply port is commenced.

By using the method of the present invention, at low temperature, axial jet combustion with air flowing around the fuel is formed, and the furnace gas is little mixed, while the mixing of the air and the fuel is promoted, to allow stable combustion. However, since the furnace temperature is low, the radiant heat transfer from the flame to its surrounding is large, to keep the flame temperature low, thus keeping NOx level low. On the other hand, at high temperature, the fuel and the air are injected into the furnace as independent jets. Before the respective jets meet each other, they sufficiently suck the furnace gas, to be mixed with and diluted by it, and subsequently are mixed with each other for combustion. In this case, since the oxygen concentration is low, the flame temperature does not rise, to keep NOx at a sufficiently low level.

However, since the furnace temperature is high, the radiant heat transfer from the flame to its surrounding is considerably less than that a low temperature, and the flame temperature is kept at a level to maintain stable combustion.

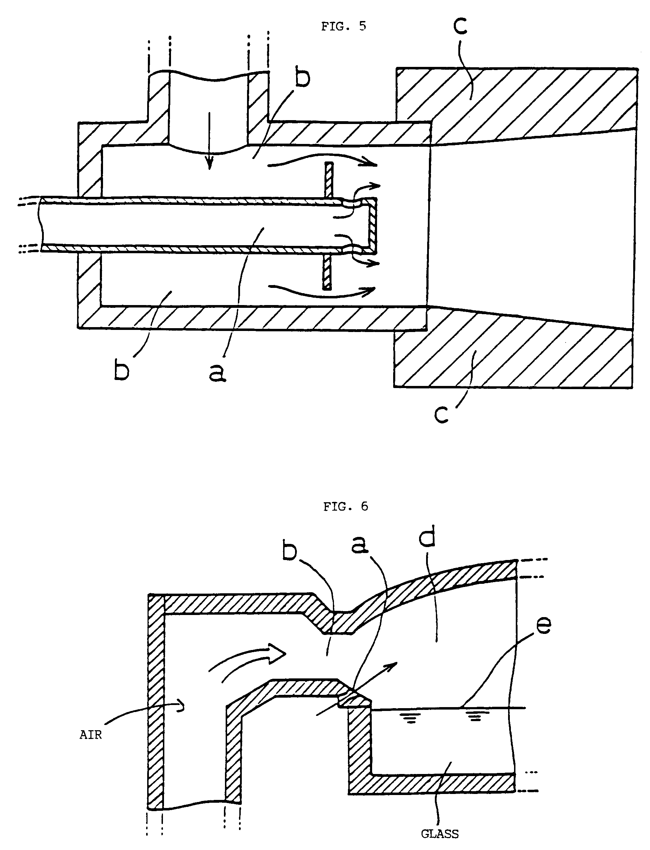

Further conventional combustion methods are described below based on Figs. 5 and 6. In Fig. 5, symbol a stands for a fuel supply portion; and b, an air supply portion. The fuel and air supplied as indicated by arrows from the respective supply portions a and b are mixed in a burner tile c, to burn and generate a flame. In this combustion method, since the area near the base of the flame highest in heat rate and also high in temperature is surrounded by a thermally insulating wall called burner tile c, radial heat dissipation does not occur, and a large volume of NOx is generated by the hot flame disadvantageously.

A combustion method actually applied to a glass melting furnace is shown in Fig. 6. In this furnace, an air supply portion b and a fuel supply portion a are opened into a furnace chamber d, but since there is little clearance between a glass surface e and the air supply portion b, gas recirculating currents are not formed in the furnace, and the air current flows along the glass surface e. Since the fuel is directly injected into the air current, the gas in the furnace is not mixed with the fuel or air, and therefore the combustion at a low oxygen concentration does not occur, to inevitably raise the flame temperature. Thus, NOx emission level is naturally high disadvantageously.

In order to explain the invention, reference being made to the accompanying drawing in which
Figs. 1 (A) and (B) are illustrative sectional views of a furnace to which the present invention method is applied. Fig. 1 (B) is a sectional view at X-X of Fig. 1 (A),
Figs. 2 are illustrations showing the relation between an air supply port and fuel supply port(s),
Fig. 3 is an illustration showing the location of adjacent air supply ports,
Fig. 4 is a NOx level diagram comparing the present invention with a conventional method,
Fig. 5 and 6 are illustrations of conventional burners.

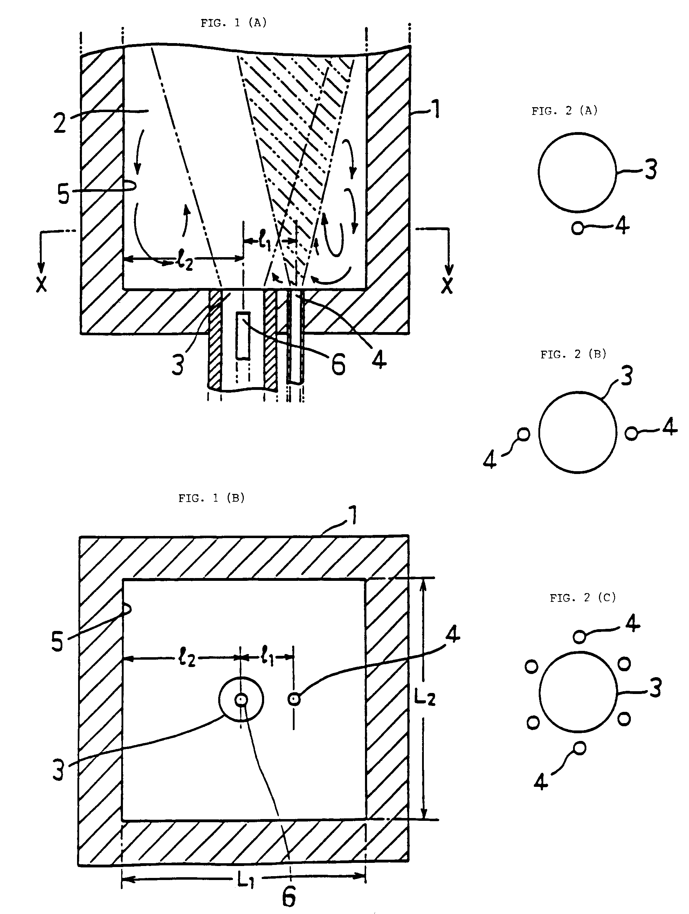

In Figs. 1, symbol 1 stands for a furnace casing, and 2, the interior of the furnace. Into said furnace interior 2, an air supply port 3 and a fuel supply port 4 are opened respectively independently with a distance of $\ell_1$ kept between them. Furthermore, between said air supply port 3 and a furnace inner wall 5, a distance of $\ell_2$ is kept. In this structure, from said air supply port 3 and said fuel supply port 4, air and a fuel are injected into the furnace interior 2, for combustion while recirculating currents are formed as indicated by arrows in Fig. 1 (A).

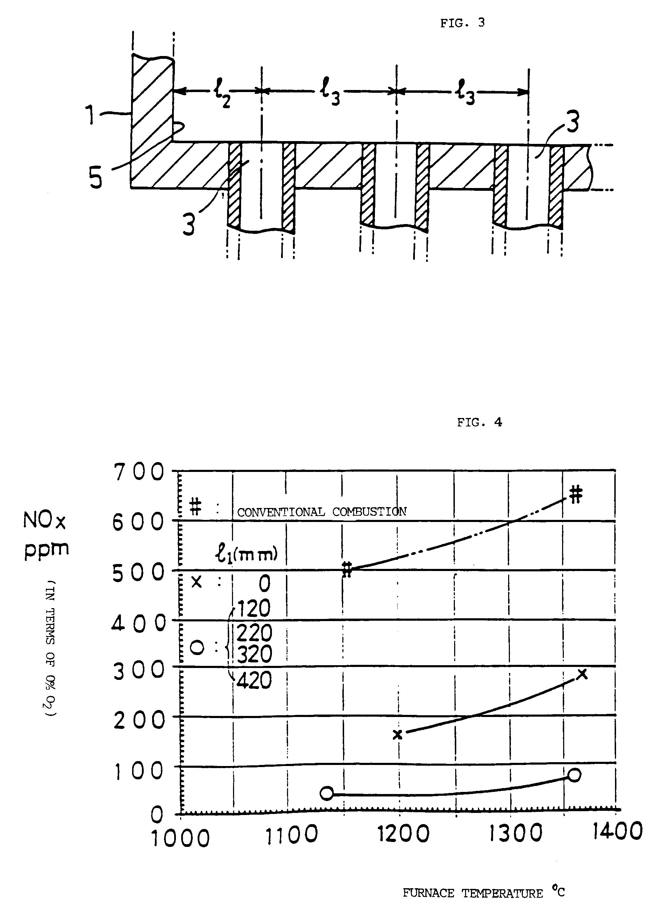

A fuel is injected from a low temperature fuel supply port 6 contained in the air supply port 3, for combustion while the temperature in the furnace interior 2 is lower than the ignition temperature of the fuel, for instance, lower than 750°C, and the combustion method is switched to the combustion method stated above when the temperature of the furnace interior 2 reaches the ignition temperature of the fuel, for instance, higher than 750°C. In the structure as shown in Fig. 3, the same structure as stated above is adopted except that plural air supply ports 3 are opened into the furnace interior 2, with a distance of $\ell_3$ kept between the respective air supply ports 3. In the structure as shown in Fig. 2, plural fuel supply ports 4 are arranged around the air supply port 3.

In Figs. 1, if air and a fuel are injected separately from the air supply port 3 and the fuel supply port 4 into the furnace interior 2, air and the fuel are not mixed directly, but mixed after they have been respectively mixed with the combustion gas in the furnace. As a result, combustion occurs at a low oxygen concentration, to achieve the effect of decreasing NOx. Furthermore, if the air and fuel injection method as stated above is used, the mixing is delayed compared with the mixing of air and fuel in a coaxial injection current as achieved by the conventional burner shown in Fig. 5, and as a result, slow combustion takes place, to provide a low temperature flame free from local high temperature. Also because of this, the effect of decreasing NOx can be achieved. Since the combustion in the present invention is as described above, the use of one air supply port 3 for one fuel supply port 4 generates a long flame which may be undesirable for some applications. In this case, if plural fuel supply ports 4 are provided as shown in Figs. 2, the fuel flow rate per fuel supply port 4 decreases, and the flame can be shortened. Even by injecting the fuel not in parallel to the air current, but at any angle against it, or by using a fuel supply port 4 with a radial nozzle at the tip, mixing state can be adjusted, to control the length of the flame. If the distance $\ell_2$ is too short, sufficient recirculating currents cannot be formed in the furnace, and the object of the present invention cannot be achieved. For instance, it is preferable that $\ell_2$ is not less than 1.5 times the diameter of the air supply port 3.

Moreover, depending on the shape and size of the furnace, it is necessary to provide plural air supply ports 3. In this case, if $\ell_3$ is too short, the recirculating currents in the furnace interfere with each other. In this case, if $\ell_3$ is not less than 2 times the diameter of the air supply port 3, the mutual interference can be prevented.

In the combustion method of the present invention, since air and a fuel are respectively mixed with the gas in the furnace before combustion, as described before, it is required to raise the temperature in the furnace upto the ignition temperature of the fuel gas by any proper means such as any temperature raising burner or ignition source at the start of operation. In the second version of the present invention, the low temperature fuel supply port 6 is provided in the air supply port 3. In this case, if the fuel is injected only from the low temperature fuel supply port 6 contained in the air supply port 3, for combustion, the mixing between air and the fuel starts as soon as the injection into the furnace interior 2 begins, and therefore, the combustion in the furnace takes place stably. Then, if the temperature in the furnace reaches a high temperature, for instance, higher than 750°C, the combustion can be changed into said regular combustion.

In the present invention, mixing and combustion start in the furnace interior 2 as described above. Therefore, the area near the base of the flame prone to high heat rate and high temperature is not surrounded by the thermally insulating wall, but exists in the space in the furnace. In the furnace interior 2, usually materials lower in temperature than the furnace inner wall 5 such as steel and molten metal exist to be heated. Therefore, as soon as the flame is generated in the space in the furnace, heat radiates to these low temperature materials, to lower the flame temperature. Also in this regard, the effect of lowering the NOx generation level can be achieved.

The following table shows the data obtained by using an experimental furnace shown in Fig. 1, together with the data obtained by the conventional methods. Fig. 4 shows the data of the following table in a diagram. The experimental conditions were as follows:

$L_1 = L_2 = 1000$ mm

$\ell_2 = 300$ mm

Fuel ... Natural gas

Firing rate .... $50 \times 10^4$ kcal/h

Air temperature ... $400\,^\circ$C

Air ratio ... 1.2

From the experimental data, it can be understood that the NOx could be remarkably decreased, compared with the conventional combustion method.

| conditions | furnace temperature | 1200 | 1250 | 1300 | 1300 ~ 1500 |
|---|---|---|---|---|---|
| NOX | conventional combustion method | 530 | 560 | 590 | —— |
| PPM | glass melting furnace | — | — | — | 800 ~ 1200 |
| $O_2$ | $\ell_i = 0$ (mm) | 160 | 190 | 220 | |
| 0% | present | 120 | 60 | 70 | 80 | |
| NOx PPM | invention | 220 | 65 | 60 | 70 | |
| (in terms | combustion | 320 | 45 | 50 | 60 | |
| of 0% $O_2$) | method | 420 | 50 | 50 | 60 | |

(Effects of the invention)

(1) Since air and a fuel are injected directly into the furnace with a distance kept between them and is then mixed, the mixing velocity is low, to cause slow combustion, and as a result, the flame temperature is lowered to generate less NOx.

(2) Since the distance between the air supply port nearest to the furnace inner wall and the furnace inner wall and the mutual distance between the air support ports are sufficiently long, recirculating currents of combustion gas are formed around the air and fuel supply ports, and before the combustion between air and the fuel starts, the combustion gas is mixed with air and the fuel. Therefore, the combustion occurs at a low oxygen partial pressure. This also lowers the flame temperature, to decrease NOx.

(3) Since the combustion starts and is completed in the furnace, the heat generation by combustion and the radiation to lower temperature materials take place concurrently to lower the flame temperature, for decreasing NOx.

## Claims

1. A method for operating a furnace (1) having an air supply port (3) and a fuel supply port (4) whereby said ports (3, 4) debouch at some distance ($\ell 1$) from each other into the furnace wherein the fuel and air are injected from said fuel supply port (4) and the air supply port (3) in such a way that jets of the air and the fuel may suck and be mixed with the furnace gas respectively independently, and are subsequently mixed with each other for combustion in the furnace (1), characterized in that when the furnace temperature is lower than the ignition temperature of the fuel, air is injected from said air supply port (3), while the fuel is not injected from the fuel supply port (4), but is injected only from an auxiliary fuel supply port (6) contained in the air supply port, to promote the mixing of the air and the fuel as coaxial jets for combustion, and when the furnace temperature has reached a temperature higher than the ignition temperature of the fuel, the supply of fuel from said auxiliary fuel supply port (6) is stopped and the supply of fuel from the fuel supply port (4) is commenced.

4

2. A method, according to claim 1, wherein plural air supply ports (3) apart from one another debouch into the furnace (1).

3. A method, according to claim 1 or 2, wherein plural fuel supply ports (4) are arranged around an air supply port (3).

## Patentansprüche

1. Verfahren zum Betreiben eines Ofens (1) mit einem Lufteinlaß (3) und einem Brennstoffeinlaß (4), welche Einlässe (3, 4) in einem Abstand ($\ell$1) voneinander in den Ofen einmünden, wobei Brennstoff und Luft durch Brennstoff- (4) und Lufteinlaß (3) derart eingespritzt werden, daß Strahlen von Luft und Brennstoff unabhängig voneinander Feuerungsgas ansaugen und jeweils damit vermischt werden und später miteinander vermischt werden zur Verbrennung im Ofen (1), dadurch gekennzeichnet, daß, wenn die Ofentemperatur geringer als die Zündtemperatur des Brennstoffs ist, Luft durch den Lufteinlaß (3) eingespritzt wird, während der Brennstoff nicht durch den Brennstoffeinlaß (4), sondern nur durch einen im Lufteinlaß enthaltenen zusätzlichen Brennstoffeinlaß (6) eingespritzt wird, um das Vermischen von Luft und Brennstoff als koaxiale Strahlen für die Verbrennung zu fördern, und wenn die Brennertemperatur eine Temperatur höher als die Zündtemperatur des Brennstoffs erreicht hat, die Zufuhr von Brennstoff durch den zusätzlichen Brennstoffeinlaß (6) beendet und die Zufuhr von Brennstoff durch den Brennstoffeinlaß (4) begonnen wird.

2. Verfahren nach Anspruch 1, wobei zahlreiche Lufteinlässe (3) voneinander beabstandet in den Ofen (1) einmünden.

3. Verfahren nach Anspruch 1 oder 2, wobei zahlreiche Brennstoffeinlässe (4) um einen Lufteinlaß (3) herum angeordnet sind.

## Revendications

1. Procédé pour le fonctionnement d'un four (1) comportant un orifice d'alimentation d'air (3) et un orifice d'alimentation de combustible (4), les orifices (3, 4) aboutissant à une certaine distance ($\ell$1) l'un de l'autre dans le four, le combustible et l'air étant injectés à partir de l'orifice d'alimentation de combustible (4) et de l'orifice d'alimentation d'air (3) de sorte que des jets d'air et de combustible peuvent être aspirés et mélangés respectivement et de façon indépendante avec le gaz du four, et sont ensuite mélangés entre eux pour la combustion dans le four (1), caractérisé en ce que lorsque la température du four est inférieure à la température d'inflammation du combustible, l'air est injecté à partir de l'orifice d'alimentation d'air (3), tandis que le combustible n'est pas injecté à partir de l'orifice d'alimentation de combustible (4) mais il est injecté uniquement à partir d'un orifice d'alimentation de combustible auxiliaire (6) ménagé dans l'orifice d'alimentation d'air, afin d'activer le mélange de l'air et du combustible sous forme de jets coaxiaux pour la combustion, et lorsque la température du four a atteint une température supérieure à la température d'inflammation du combustible, l'alimentation en combustible à partir de l'orifice d'alimentation de combustible auxiliaire (6) est interrompue et l'alimentation à partir de l'orifice d'alimentation de combustible (4) se met en route.

2. Procédé selon la revendication 1, dans lequel plusieurs orifices d'alimentation d'air (3) séparés entre eux aboutissent dans le four (1).

3. Procédé selon la revendication 1 ou 2, dans lequel plusieurs orifices d'alimentation de combustible (4) sont disposés autour d'un orifice d'alimentation d'air (3).

FIG. 1 (A)

FIG. 2 (A)

FIG. 2 (B)

FIG. 1 (B)

FIG. 2 (C)

EP 0 343 746 B1

FIG. 3

FIG. 4

FURNACE TEMPERATURE °C

7

FIG. 5

FIG. 6